# EUROPEAN PATENT SPECIFICATION

(11) **EP 1 956 777 B1**
(45) Date of publication and mention of the grant of the patent: **09.01.2013**
(21) Application number: 07120420.0
(22) Date of filing: 09.11.2007
(51) Int. Cl.: H04L 12/58

(54) **Method and system for reducing the proliferation of electronic messages**
Verfahren und System zur Eindämmung der Verbreitung von E-Mails
Procédé et système pour la réduction de la prolifération de messages électroniques

(30) Priority: 08.02.2007 NL 1033356
(43) Date of publication of application: 13.08.2008
(73) Proprietor: DLB Finance & Consultancy B.V., 4874 LV Etten-Leur (NL); HITD Information Technology B.V., 3181 NZ Rozenburg (NL)
(72) Inventor: Benschop, Dirk Leonard, 4874 LV, Etten-Leur (NL); Benschop, Henderik Reinout, 3181 NM, Rozenburg (NL)
(74) Representative: van Looijengoed, Ferry Antoin Theodorus

(56) References cited:
- EP-A- 0 813 162
- EP-A2- 1 496 655
- WO-A-01/72002
- WO-A-2004/071035
- WO-A-2004/088455
- WO-A1-03/061213
- US-A1- 2005 081 051

## Description

### FIELD OF THE INVENTION

The invention relates to a method and system for reducing the proliferation of electronic messages. More specifically, the invention relates to a method and system for reducing the proliferation of unsolicited electronic messages in a server system comprising one or more servers for distributing said electronic messages and at least a first user device and a second user device arranged for receiving said electronic messages from said server system.

### BACKGROUND

E-mail spam may generally be defined as unsolicited and/or undesired e-mail messages received by an e-mail recipient.

The amount of e-mail spam messages has dramatically increased over the last decade. The reason for that may be found in the huge number of addressees that can be reached with an e-mail at negligible costs. This combination of factors together with the obligatory delivery of e-mail has made e-mail or, more generally, electronic messaging an attractive communication medium for advertisement of a variety of products and services. Collections of e-mail addresses of people all over the world can be bought from numerous parties at very low cost. E-mail spam messages not account for more than 90% of all e-mail messages transmitted over the internet. As a consequence, electronic resources are wasted to a serious extent.

The increase of the amount of e-mail spam messages has triggered others to provide e-mail spam filters. These filters can be installed both on the side of the server and on the side of the client devices to detect and delete e-mail spam messages without troubling the user. Typically, these filters analyse e-mail messages and match the analysis results against e-mail spam rules in order to recognize e-mail spam. These e-mail spam rules are designed on the basis of known typical characteristics of e-mail spam messages, such as the number of addressees in the e-mail header or the occurrence of certain words in the e-mail body.

However, new forms of spam will not always be recognized and intercepted by these filters, since the e-mail spam rules are not able to recognize these new forms of spam since these spam rules for the new form of e-mail spam message could not yet have been implemented in the spam filter. As a consequence, a continuous race exists between e-mail spammers and spam filter providers, the latter by definition lagging behind the former. On the other hand, solicited and desired e-mail messages are sometimes filtered from the e-mail box of a recipient, because the e-mail message is qualified as spam as dictated by the e-mail spam rule set of the spam filter.

Furthermore, if e-mail spam filters are installed, the filters analyze each individual e-mail message in order to detect e-mail spam messages. As a consequence, message transfer is delayed and resources are wasted.

US 2007/0106734 discloses a system comprising a server and a method for limiting proliferation of unwanted electronic messages. The server can receive a notification from a first user identifying a first electronic message as spam and compare parameters associated with the first electronic message against spam criteria. Responsive to the parameters meeting the spam criteria, other instances of the first electronic message can be blocked from being sent to other users and a credit notification for an account of the first user can be generated. A second user from whom the spam originated can be added to a blocked sender list of the first user. Responsive to identifying a second electronic message generated from the first user to the second user, a correction charge notification can be generated for the account of the first user.

The system and method of US 2007/010106734 require the use of a spam filter and matching spam parameters against spam criteria. Only when spam parameters are identified, users may send spam notifications and other instances may be blocked.

It will be apparent that there is a need in the art for an improved or different method and system for reducing the proliferation of electronic messages, in particular e-mail spam messages.

EP-A-0 813 162 discloses a method and apparatus to identify and discard junk electronic mail in order to reduce the exposure of e-mail to particular users. A group of trusted users collectively determines whether an electronic message is junk e-mail, and the e-mail systems of other users dispose unviewed copies of the junk e-mail upon receipt of a junk mail warning message.

WO 2004/071035 discloses dynamic server-based filtering that selectively deletes or delivers messages based upon characteristics of the received messages and the filtering rules implemented on the server.

WO 01/72002 discloses a system for sharing information among members of a group. A member of the group may be temporarily suspended from participating is there is an issue with e-mail by that member.

WO 03/061213 discloses a method for electronic mail notice and download. A sender mailbox at a source downemail server is introduced and the place at which an original message is stored until an intended recipient reads it is moved from the recipient mailbox at a destination downemail server to the sender mailbox. To relay a message from the email system to the downemail system, a message interworking server is also designed. The source downemail server generates a signaling message to notify the sending of a message and then transmits it to an intended recipient. After reading the signaling message, the recipient can get the original message from the sender mailbox.

EP-A-1 496 655 discloses a system for detecting and preventing spam. The system provides several techniques for monitoring outgoing communications to identify potential spammers, such as identification and scoring. Further action can be taken to verify whether the potential spammer is a spammer. Such actions include human-inspecting a sample of the messages, sending challenges to the account, sending a legal notice to warn potential spammers and/or shutting down the account.

US 2005/0081051 discloses a system wherein a request to send an electronic mail message with a file attachment to intended recipients is received. A characteristic of the intended recipients are compared with a maximum recipient limit for the file attachment. If the characteristic of the intended recipients exceeds the maximum recipient limit for the file attachment, then a sender authorization is requested prior to sending, the electronic mail message. The sender authorization is required such that if a virus is attempting to self-propagate by sending the electronic mail message, the attempt is mitigated.

WO 2004/088455 discloses a method for controlling a message from a sender. A referee can evaluate a credential associated with a message to determine it' s desirability to the intended recipient, and take an action based upon the results of the determination. A sender that includes a trusted component can send a credential with the message, and the message can be controlled without a referee.

### SUMMARY OF THE INVENTION

It is an object of the invention to provide a method and system reducing the problems identified in the previous section.

To that end, a method as defined in claim 1 is disclosed. The number of spam notification signals resulting in the restriction of access to the electronic message may be set. As an example, the number may be set to 50, 25, 10, 5 or even 1 spam notification signal before access to the electronic message is restricted.

The applicant also proposes a computer program as defined in claim 17 and a carrier containing such a computer program as defined in claim 18, wherein the computer program contains software code portions capable of, when installed in and executed by an electronic device, performing the method described in the previous paragraph.

Also, a server system as defined in claim 19 is disclosed.

It should be noted that access to the electronic message, the portion thereof or other previous or future electronic messages may be restricted for a user device and/or the user of the user device, the latter option making use of e.g. identification data of the user.

It should also be appreciated that the server system does not necessarily refer to a client-server system. The invention may also be applicable in peer-to-peer networks, such as e.g. used for bittorrent applications, wherein a server or (some) server functionality may be considered to be part of one of more of the user devices participating in the peer-to-peer network. The spam notification signal may then e.g. be broadcast over the peer-to-peer network from one user device to others.

The method and system may be embodied as a web application.

The applicant has realized that the employment of prior art e-mail spam filters is dissatisfactory. The rule set used for recognizing e-mail spam messages is always outdated, despite the regular updates of the rule set provided by the spam filter developers. Ultimately, only human beings will be able to recognize e-mail spam messages. Moreover, the applicant has realized that the improvement of spam filters contributes to the increase of the total amount of spam rather than reducing it. The applicant, therefore, proposes to (solely) use spam notification signals from users to detect electronic spam messages and, upon receipt of such a spam notification signal, to restrict access to the corresponding electronic message for other (users of) user devices. The server system thus allows that addressees of an electronic message themselves determine what electronic messages are spam messages and that the addressees are subsequently able to determine the access (rights) of other addressees to that message (and possibly other previous and/or future electronic messages from the same source). In other words, the spam notification signal is an order to the server system to restrict access to messages. In case of multiple spam notification signals, each signal can be regarded as a partial order. As an example, the other (users of) user devices may not display of download the electronic message. Spam filters using spam recognition rule sets, spam parameters and criteria may be absent in the server system, at least for those electronic messages for which a spam notification signal has been received.

The embodiments of claims 2, 3 and 20 provide the advantage of establishing a subscriber-only system for electronic message distribution. Since the subscribers are known, e-mail spammers and other abusers of the system can be identified and excluded from participation as a subscriber to the system. Moreover, this embodiment allows identification of users of the server system to exclude users from the system.

The embodiments of claims 4 and 21 prevent the possibility of sniffing the identity of participants to the system and to subsequently participate in the server system under a false identity. Secure communication may be realized by one or more known techniques, such as encrypting data or providing secure network connections.

Conventional e-mail servers duplicate e-mail messages for each addressees. The duplicated e-mail messages are each analyzed by the conventional spam filters. The embodiments of claims 5-9 and 22-26 provide the advantage of limited use of resources. The embodiments also facilitate access restriction to the electronic message. In these embodiments, only small portions (e.g. less than 200 bytes or 100 bytes) characterizing the original electronic message are made available to the addressees. These portions may e.g. include a sender identification, a subject of the electronic message, a date of the electronic message and/or a retrieval key containing information were and/or how to retrieve the complete electronic message. The portions of the electronic message may either be pushed to the servers of the server system or be queried from a particular server of the server system, if needed. Thus, resource consuming processing and network capacity requirements are seduced considerably. Reference is made to a co-pending international patent application of the applicant ("method and system for transmitting an electronic message") filed on the same date as the present application, the contents of the international application being incorporated in the present application by reference in its entirely.

The embodiments of claims 10-12 and 27-29 provide the advantage of enabling users to restrict access to other previous and/or future electronic messages from the same source on the basis of a sender identification of an electronic message for which a spam notification signal was received. Provisions can be made to mitigate the severity of such a measure for the sender on the basis of various parameters, such as the number of offences of the sender. In particular, the applicant proposes to restrict access to other electronic messages for addressees of the electronic message for which the at least one spam notification signal was received in dependence of a communication history between said sender and said one or more addressees from which a spam notification signal was received. As an example, access restriction to other electronic messages may be performed immediately if the sender is unknown to the recipient (e.g. if the sender and recipient have not exchanged electronic messages previously). However, if the sender and recipient know each other, access to other electronic messages is not restricted at once (but possibly only after several spam notification signals have been received for different electronic messages).

The embodiments of claims 13 and 30 provide the possibility of the server system sending a warning signal to the sender of the electronic message for which a spam notification signal was received. This allows for providing the sender with information concerning the consequences of further offences. The consequence of restricting access to the server system can be obtained by the embodiments of claims 14, 15, 31 and 32. The consequence of no lounger giving access to the server system may be mitigated. In particular, the applicant proposes to restrict access to the server system for senders of the electronic message for which the at least one spam notification signal was received in dependence of a communication history between said sender and one or more addressees from which a spam notification signal was received. As an example, access restriction to the server system may be performed immediately if the sender is unknown to a recipient (e.g. if the sender and recipient have not exchanged electronic messages previously) and the recipient issues a spam notification signal. However, of the sender and recipient know each other, access to the server system is not restricted immediately in response to a spam notification signal issued from the user device of a known recipient (but possibly only after spam notification signals have been received for different electronic messages). Reference is made to a co-pending international patent application of the applicant ("Method and system for restricting access to an electronic message system") filed on the same date as the present application, the contents of the international application being incorporated in the present application by reference in its entirety.

Of course, the server system may employ spam filters in addition to the functionality described in the present application for reducing the proliferation of electronic message. However, the server system as defined above operates independently from the operation of these possible spam filters as defined in claims 16. and 33.

In an embodiment of the invention, the server system would not comprise an e-mail server. E-mail servers typically only store electronic messages and forward the messages upon request. The embodiment of claim 34 proposes to use programmable databases. Programmable databases allow to program predetermined responses in dependence on the type of request received. For spam notification, the users are allowed to perform an operation (requests) on a database, wherein the response of the database is e.g. the restriction of access for other addressees of the electronic message, the restriction of access to other electronic messages of the same source and/or the exclusion of the sender from the system. Moreover, such a programmable database allows for monitoring relations between several parameters.

It should be noted that the above-embodiments, or aspects thereof, may be combined or isolated. As an example, the method and server system may also allow access restriction for other previous or future electronic messages only, i.e. without restricting access to the particular electronic message for which the one or more spam notification signals were received. In other words, the method and system as defined in claims 10-12 and 27-29 may be applied independently from the subject-matter of claims 1 and 22, respectively.

Hereinafter, embodiments of he invention will be described in further detail. It should be appreciated, however, that these embodiments may not be construed as limiting the scope of protection for the present invention.

### BRIEF DESCRIPTION OF THE DRAWINGS

In the drawings:
FIG. 1 shows a schematic example of a communication system for exchanging electronic messages;
FIG. 2 shows a schematic example of a server system;
FIG. 3 shows a flow chart depicting steps of a method for reducing the proliferation of electronic messages for the communication system of FIG. 1;
FIG. 4 illustrates another example of a communication system for exchanging electronic messages;
FIG. 5 shows a flow chart depicting steps of a method for reducing the proliferation of electronic messages for the communication system of FIG. 4, and
FIG. 6 shows an exemplary model for a database of a server of a server system according to an embodiment of the invention.

### DETAILED DESCRIPTION OF THE DRAWINGS

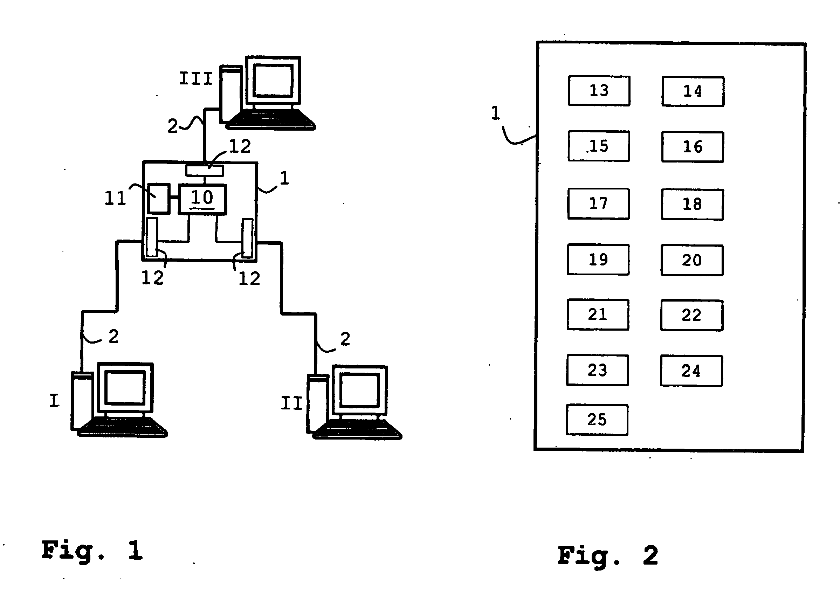

FIGS. 1 and 2 show a server system 1 according to an embodiment of the invention. The server system 1 is connected to a first user device I, a second user device II and a third user device III via network connections 2. The network connections 2 may involve multiple networks, both wired and wireless, and the connection of the user devices I, II, III is not necessarily direct to the server system 1.

The first, second and third user devices I, II, III are arranged for sending and receiving electronic messages, such as e-mail messages, and may be personal computers, mobile communication devices etc.

The server system 1 comprises a processor 10, a memory 11 and a network adapter 12 for communicating with the first, second and third user devices I, II, III. It should be appreciated that the server system 1 is normally capable of connecting to more than the three user devices I, II and III shown in FIG. 1.

The specific functions of the server system 1 are schematically illustrated in FIG. 2 and will now be described in further detail. It should be appreciated that the functions may be largely implemented as software code portions of one or more computer programs executed by the processor 10.

The server system 1 is arranged to receive an electronic message from the third user device III.

The server system 1 comprises an electronic message receiver 13 arranged for receiving an electronic message or a portion thereof and an electronic message provider 14 arranged for providing said electronic message or said portion thereof to the first user device I. The server system 1 also contains a spam notification receiver 15 arranged for receiving a spam notification signal from the first user device I related to the electronic message or the portion thereof. Also, the server system 1 comprises an access restrictor 16 arranged for restricting access to the electronic message for the (user of) the second user device II solely in response to receiving said spam notification signal from said first user device.

The server system 1 has a register 17 storing a unique login code comprising a user name and a user specific password required for accessing the server system 1 for each user of the user devices I, II and III.

Communication over the network connections 2 is secured. To that end, the server system 1 contains an encryptor 18 for encrypting part or all communications between the server system 1 and the first, second and third user devices I, II, and III. It is noted that alternatively, or in addition thereto, the network connections 2 may be secured. Secure communication prevents or reduces the possibility of sniffing identities of (the users of) the first, second and third user device I, II and III.

The server system 1 may be arranged to make a copy of the electronic message for both the first user device I and the second user device II. However, it may also be that the server system 1 only stores a single copy of the electronic message received from the third user device III.

The server system 1 has an electronic mail deleter 19 for deleting the electronic mail and the copies and/or portions thereof, if any, in response to the spam notification signal from the first user device I.

Furthermore, the server system 1 has a sender identification storage 20 arranged for storing a sender identification of a sender of the electronic message for which the spam notification signal receiver 15 received a spam notification signal, i.e. the identification of the user of the third user device III. If other electronic messages are received or have been received in the past from this user, the access restrictor 16 may use the sender identification to restrict access to these other electronic messages for the second user device II automatically, i.e. without requiring a further spam notification signal for these other electronic messages. Of course, access restrictions may apply also for the (user of the) first user device.

The access restrictor 16 may be arranged such that e.g. access is restricted for the (user of the) second user device II for a particular time period or to a part of the other electronic messages. However, the access restrictor 16 may also prevent downloading of the electronic message to said second user device or prevent display of the electronic message on the second user device II.

In particular, a communication history between a sender and the recipient from which a spam notification signal was received may be taken into account. For example, if the users of the third user device III and the first user device I have not been engaged in electronic message exchange before (i.e. the users don't 'know' each other), the receiving of the spam notification signal may immediately result in preventing other addressees from downloading or displaying other past and future electronic messages. However, if the user of the third user device III and the first user device I have been involved in electronic message exchange in the past (i.e. the users 'know' each other), consequences of the spam notification signal may be less severe. Another example of users 'knowing' each other may be that each of the users have indicated prior to exchange of electronic message that they will accept electronic messages from each other.

The server system 1 may contain a counter 21 adapted for counting the number of spam notification signals received for electronic messages of a particular sender and/or for counting the number of times access has been restricted for electronic messages of said sender.

The server system 1 comprises a warning message transmitter 22 adapted for sending a warning message to a sender of the electronic message for which said spam notification signal was received from the first user device I.

The server system 1 also comprises an access restrictor 23 adapted to restrict access to the server system 1 for a sender of the electronic message for which said spam notification signal was received, i.e. the sender using the third electronic device III. Restriction of the access may involve excluding the user of the third device III from further sending and/or receiving electronic messages via the server system 1. However, the server system 1 may comprise an assessor module 24 arranged to restrict access to the server system in dependence on e.g. the number of spam notification signals received for electronic messages of the sender and/or the number of times access has been restricted for electronic messages of the sender.

In particular, a communication history between a sender and the recipient from which a spam notification signal was received may be taken into account. For example, if the users of the third user device III and the first user device I have not been engaged in electronic message exchange before (i.e. the users don't 'know' each other), the receiving of the spam notification signal may immediately result in preventing access to the server system 1 for the sender. However, if the user of the third user device III and the first user device I have been involved in electronic message exchange in the past (i.e. the users 'know' each other), consequences of the spam notification signal may be less severe for the user of the third user device III. Another example of users 'knowing' each other may be that each of the users have indicated prior to exchange of electronic message that they will accept electronic messages from each other.

It should be noted that the server system 1 may contain a spam filter using a spam rule set, spam parameters and spam criteria for detecting, and possibly restrict access to, electronic spam messages. The server system 1, however, is capable of restricting access to the server system for the (user of the) second device II and/or the sender of the electronic spam message independent from the operation of the spam filter, i.e. solely on the basis of spam notification signals.

Finally, the server system 1 contains an approval module 25 adapted to allow exchange of electronic messages between a sender, e.g. the user of the third user device III, and an addressee, e.g. the user of the first user device I, only if both the sender and the addressee have signaled approval for said exchange to the access module 25 in advance. The computer program running on the user devices I and III for sending and receiving electronic messages may e.g. comprise a mandatory address book under the control of the approval module 25. Only by using this address book, a sender may address addressees of the electronic message. Entries in the address book can be made only in response to mutual approval of users to exchange electronic messages.

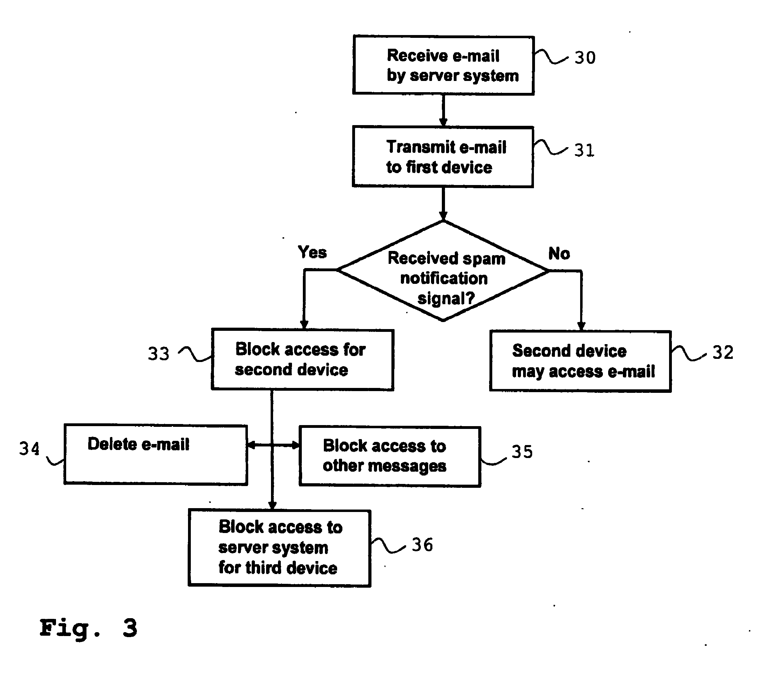

FIG. 3 illustrates a flow chart containing a few steps of the operation of the server system 1 according to an embodiment of the invention.

In a first step 30, the electronic message receiver 13 of the server system 1 receives an electronic message from the third user device III over a secure network connection 2 directed to, amongst others, the users of user devices I and II. The electronic message provider 14 of the server system 1 provides the electronic message to the first user device I in step 31.

If the first reader, e.g. the user of the first user device I, accepts the electronic message as a desired message, a spam notification signal will not be received by the server system 1 in relation to that electronic message. Consequently, the user of the second user device II may also access the electronic message, indicated in step 32.

If the user of the first user device I qualifies the contents of the electronic message as spam, he may transmit a spam notification signal relating to the electronic spam message to the server system 1. The user of the first user device I may e.g. send a spam notification signal by activating a dedicated button on a user interface of the first user device I. The spam notification signal is detected by the spam notification signal receiver 15 of the server system 1. In response to receiving the spam notification response signal, the access restrictor 16 restricts access for (a user of) the second user device II to the electronic message, indicated by step 33. The e-mail deleter 19 of the server system 1 may e.g. delete the electronic spam message for which the spam notification signal was received (step 34).

Preferably, the user of the third user device III distributing the electronic spam message is known to the server system 1, e.g. by having stored in register 17 a unique login code comprising a user name and a user specific password required for accessing the server system 1. Using these data, the sender identification storage has stored the identity of the sender of the electronic spam message. If an other electronic message is sent (not necessarily an electronic spam message) or has been sent previously, it is determined that for this sender a previous spam notification signal has already been received. Access to these other messages of the sender may therefore be denied as well. Consequently, neither the first user device I nor the second user device II will have access to these other electronic messages (step 35). As such a measure may be rather harsh on the sender of the previous electronic spam message, consequences may be mitigated by allowing the access restrictor 16 to restrict access for the (user of the) second user device II for a particular time period and/or to only a part of the other electronic messages. The assessor module 24 may be used for this purpose. In particular, if the sender and recipient have exchanged electronic messages before, access restriction to other electronic messages may be only performed after a certain number of spam notification signals from a recipient, using counter 21.

Finally, in step 36, the access restrictor 23 restricts access to the server system 1 for (the user of) the third user device III for which the spam notification signal was received. Restriction of the access may involve exempting the user of the third device III from further sending and/or receiving of electronic messages via the server system 1. Again, as such a measure may be harsh on the user of the third user device III, the assessor module 24 may restrict access to the server system 1 in dependence on e.g. the number of spam notification signals received for electronic messages of the sender and/or the number of times access has been restricted for electronic messages of the sender. In particular, if the sender and recipient have exchanged electronic messages before, access restriction to the server system may be only performed after a certain number of spam notification signals from a recipient, using counter 21.

It should be appreciated that, while in the above example a single spam notification signal was sufficient to exclude other addressees from receiving (other) electronic messages and to exclude a sender from participation in the system, another number of spam notification signals may be set before such consequences will apply.

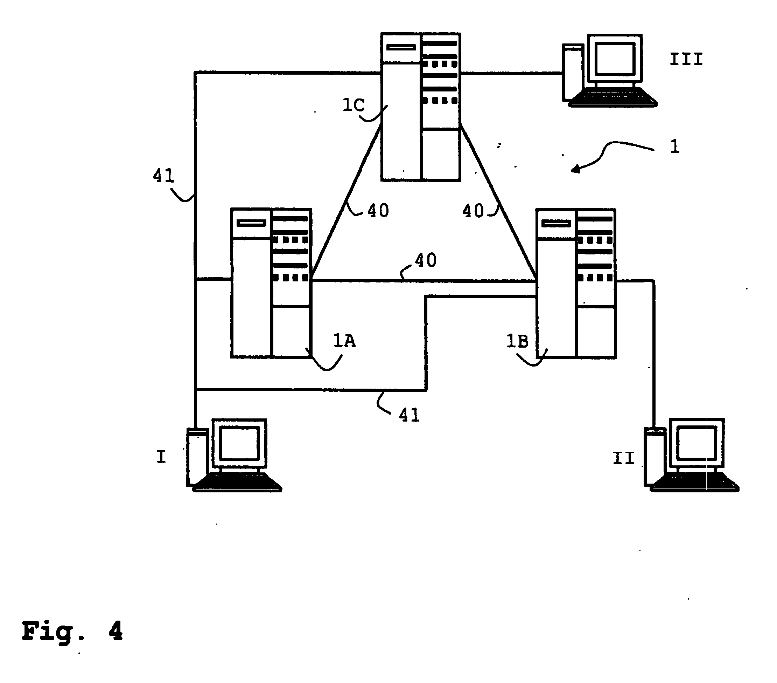

In the system of FIG. 1, the server system 1 comprises a single server. However, the server system 1 may also comprise several servers 1A, 1B, 1C in communicative connection with each other as illustrated in FIG. 4. That is, the servers 1A, 1B and 1C together form a server system 1. The connections 40 connecting the servers 1A, 1B and 1C constitute an inner ring. The first, second and third user devices I, II and III may connect to different servers 1A, 1B and 1C of this inner ring, as shown in FIG. 4, either directly or via further servers (not shown). Each of the first, second and third user devices I, II and III may also access the servers 1B and 1C; 1A and 1C and 1A and 1B, respectively without using the inner ring formed by the connections 40. In FIG. 4, this outer ring, formed by connections 41, is only drawn for the first user device I.

Communication may be secured in both the inner ring and the outer ring. This may be done by encrypting communication over the inner ring and outer ring and/or by making use of secure connections.

Each server 1A, 1B, 1C of the server system 1 may contain the same functional modules 13-25 as described with reference to FIG. 2. However, the functional modules may also be distributed over the various servers 1A, 1B and 1C.

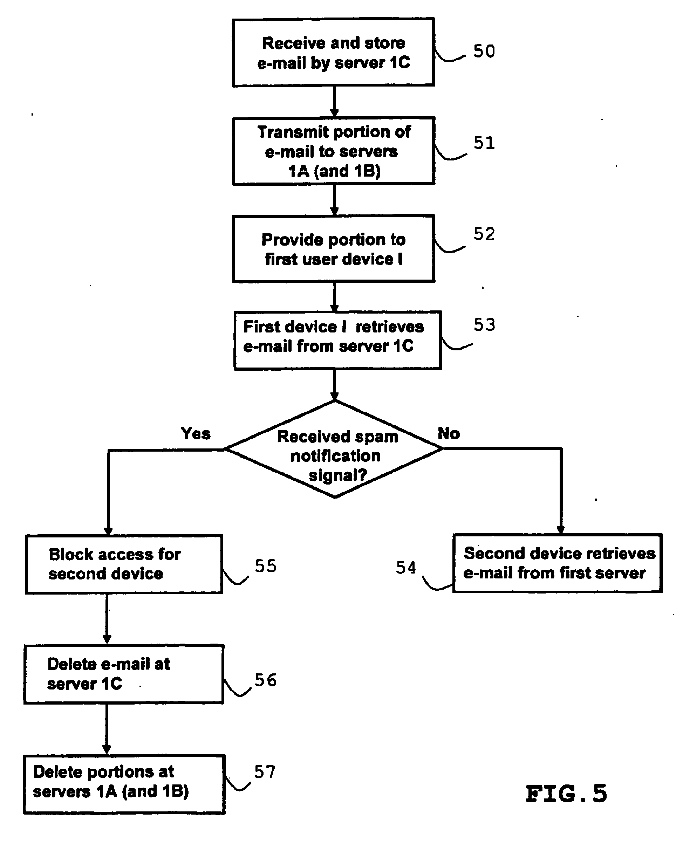

An embodiment of the operation of the system in accordance with FIG. 4 will now be described with reference to FIG. 5.

The user of the third user device III sends an electronic spam message to the server system 1 with the users of user devices I and II as addressees.

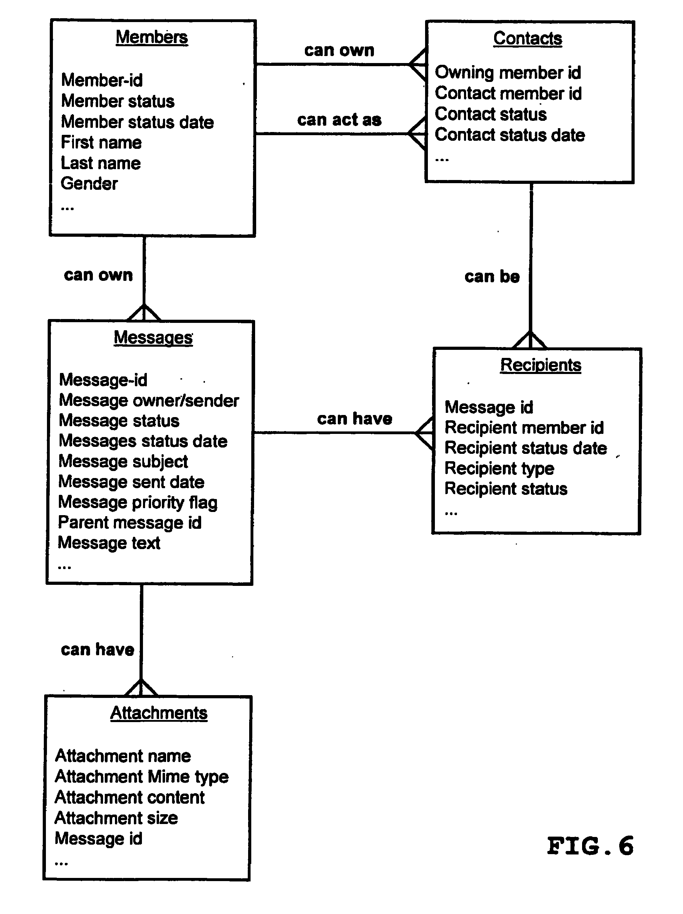

The electronic message receiver 13 of server 1C receives the electronic spam message, possibly divided in fields, and stores the message/fields in the memory 11 in step 50 in a manner further described with reference to FIG. 6. Briefly, instead of storing the electronic message in a conventional e-mail server, individual parts (fields) of the electronic message are stored separately in fields of a database model.

In step 51, the electronic message provider 14 of the third server 1C assembles an electronic message portion with characteristics of the original electronic message. A portion of an electronic message may e.g. comprise one or more fields of the electronic message or a new portion assembled on the basis of characteristics of the electronic message. As an example, the portion of the electronic message contains a sender-field, a subject-field, a retrieval key for retrieving the complete electronic message and possibly a date. The data size of the portion of the electronic message may be less than 200 bytes. A portion provider of the electronic message provider 14 transmits the portion of the electronic message to the first server 1A and the second server 1B using the inner ring of the server system 1. Instead of pushing the portion of the electronic message from the third server 1C to the first and second servers 1A, 1B, the first server 1A may query the portion of the electronic message from the third server 1C upon receiving the request from the first user device I to open the mailbox. Reference is made to the international patent application ("Method and system for transmitting an electronic message") from the same applicant and filed on the same date as the present application, the contents of the international application be incorporated in the present application by reference in its entirety. This latter alternative provides the advantage that even the small portions of the electronic message are only transferred if necessary. The complete electronic message is stored only at server 1C.

Again, it is assumed that the user of the first user device I first opens his mailbox. By doing so, the first server 1A provides the portion of the electronic message to the first user device I in step 52. The electronic message itself may be retrieved in step 53 by the first user device from the third server 1C over the connections 41 forming the outer ring by selecting the portion of the electronic message provided from the first server 1A.

If the user of the first user device I does not qualify the electronic message as spam, the user of the second device II may access the electronic message as well, e.g. by downloading the electronic message from the third server 1C (step 54).

If the user of the first user device I qualifies the contents of the electronic message as spam, he may transmit a spam notification signal relating to the electronic spam message to the server system 1. The user of the first user device I may e.g. send a spam notification signal by activating a dedicated button on a user interface of the first user device I. The spam notification signal is detected by the spam notification signal receiver 15 of the server 1C. In response to receiving the spam notification signal, the access restrictor 16 of the server 1C restricts access for (a user of) the second user device II to the electronic message, indicated by step 55. The e-mail deleter 19 of the server 1C may e.g. delete the portion of the electronic spam message at the second server 1B, such that the user of the second device II has no access to the electronic spam message at the third server 1C. Moreover, the e-mail deleter 19 may delete the electronic spam message itself from the memory 11 of the third server 1C as well as the portion of the electronic message from the first server 1A. These measures are indicated at steps 56 and 57. The deletion of the (portion(s) of) the electronic message is instructed over the inner ring of FIG. 4.

As mentioned above, the server system 1 stores only a single copy of the electronic message (at server 1C) independent of the number of addressees. The addressees are notified of the electronic message by means of portions characterizing the electronic message of small size. This saves a large amount of resources. However, the server system 1 may provide multiple copies of the electronic message if such an approach proves to be more effective. The number of copies of the electronic message is less than the number of addressees of said electronic message.

As for the embodiment of FIGS. 1 and 3, the user of the third user device III distributing the electronic spam message may be known to the server system 1, e.g. by having stored in register 17 of the third server 1C a unique login code comprising a user address and a user specific password required for accessing the server system 1. Using these data, the sender identification storage 20 has stored the identity of the sender of the electronic spam message. If an other electronic message is sent or has been sent (not necessarily an electronic spam message), it is determined that for this sender a previous spam notification signal has already been received. Access to these other messages of the sender may therefore be denied for the users of both devices I and II. Consequently, neither the first user device I nor the second user device II will have access to these other electronic messages. As such a measure may be rather harsh on the sender of the previous electronic spam message, consequences may be mitigated by allowing the access restrictor 16 at the third server 1C to restrict access for the (user of the) second user device II for a particular time period and/or to only a part of the other electronic messages. In particular, a communication history for the sender may be used for determining the consequences.

It should be appreciated that the register 17 may be shared by multiple servers 1A, 1B and 1C, as well as the sender identification storage 20 for senders of previous electronic spam messages.

Also, as previously described for the embodiment of FIGS. 1 and 3, the server system 1 may be triggered, using the spam notification signal, to block access for the user of the third user device to the server system 1 (including the milder variants) or the send a warning message.

Again, it should be appreciated that, while in the above example a single spam notification signal was sufficient to exclude other addressees from receiving (other) electronic messages and to exclude a sender from participation in the system, another number of spam notification signals may be set before such consequences will apply.

The servers 1A, 1B and 1C of the server system 1 are preferably not conventional e-mail servers. Such e-mail servers store e-mail messages, duplicate the e-mail messages to the number of addressees and provide the e-mail messages upon request for a particular one of those messages. The functionality of these mail servers is rather limited.

The applicant proposes to use one or more databases, such as Oracle^{®} databases, for which the response can be programmed in dependence of e.g. the request made to the database. Incoming electronic messages are analyzed as or received in predetermined parts, which are stored in fields of the database(s). As an example, the header of a conventional e-mail is stored in separate fields, some of which are depicted in the data model of FIG. 6.

The methods as described above may be performed in a subscriber-only system, wherein the details of subscribers/participants are known and wherein the subscribers have agreed to comply to particular general conditions. The members of the system have a place in the data model of FIG. 6.

The use of databases for the servers 1A, 1B and 1C allows monitoring relations between different fields, as shown in FIG. 6.

The functionality as described above can be obtained using the database model of FIG. 6.

As an example, if a user issues a spam notification signal, the recipient status and recipient status date are updated. If a single spam notification signal is sufficient for restricting access to the electronic message for other recipients and to restrict access to the server system 1 for a sender, this status will propagate to the message status and the member status, respectively. By adding a messages status date and a member status data to the data model, flexibility is obtained.

Fields of the box "messages" may be part of the portion of the electronic message that is pushed or queried in the server system. Examples include the message owner/sender, the message subject and the message sent date. The message id relates to the retrieval key for retrieving the complete electronic message.

It should be noted that when a mandatory address book for addressing addressees of the electronic message is not used, the box "contacts" may be eliminated in the database model and a link can be established directly from the box "members" to the box "recipients".

The server system 1 may contain an approval module 25. it is noted that the below described operation of the approval module may be applied independently of the method described above, in particular with respect to the spam notification signal. As such, the server system 1 may be so configured for all the participants that any and all information addressed to them as participants cannot reach them and that, prior to the first communication within the system between two participants A and B, the two participants A and B will first have to go through an arrangement/approval protocol.

If A requests the server system 1 to enable communication with B, and B does not request the server system 1 to enable communication with A within a predetermined period, for example 1 day or 2 weeks, counting from the moment A made the request, the server system 1 will regard and register the communication as possibly unwanted for B and break off the arrangement protocol.

Also, the server system 1 may be configured so that if a participant A, who requests the server system 1 one or more times, for example 3 times or 10 times, within a predetermined period, for example 1 day or 2 weeks, to enable communication with one or more participants B, C, etc, and if one or more participants B, C, etc do not request the server to enable communication with A within said period, said participant A might be regarded as a potential source of spreading unwanted information, and that thus, and on the basis of registration by the server system 1 of one-sided communication requests from A, said requests from participant A may be subjected to a closer examination by the administrator, wherein the administrator has a possibility to terminate A's connection, for example, if A appears to have evil intentions, such as the sending of electronic spam messages.

The server system 1 may be configured so that A and B individually have a possibility to configure the server system 1 to enable them to address information to each other and/or download each other via the system once only, or for a specific period of time.

The server system 1 may be configured such that that if a participant A repeatedly, for example twice, addresses information to another participant B, C, etc in the system within a predetermined period, for example 1 day or 2 weeks, and the communication arrangements made between A and the other participant B, C, etc allow this, and a number of participants, for example one or more participants B, C etc limit the arrangements made with A within the fixed period to such an extent that they cannot download information originating from A any more, the administrator will detect and regard participant A as a potential source of unwanted communication, in which case the communication requests from said participant A can be subjected to a closer examination by the administrator, with the administrator having a possibility to terminate A's connection, for example, if A appears to have evil intentions, such as the sending of spam.

The server system 1 may be configured so that if one or more participants B, C etc limit the arrangements made with regard to a participant A for a specific period, for example 1 day or 2 weeks, to such an extent that B, C etc cannot download information addressed by A any more, participant A will be detected by the server system 1 and may be regarded as a potential source of unwanted communication by the administrator, whereupon the administrator can exclude participant A as an unwanted participant.

The server system 1 may also be configured so that a participant A cannot address a box number other than one of the box numbers whose owners have allowed participant A to send them information.

The approval module 25 in its variants may be applied in combination with a mandatory address book for addressing addressees of an electronic message.

## Claims

1. A method of reducing the proliferation of electronic messages in a server system (1) comprising one or more servers arranged for transmitting said electronic messages to at least a first user device (I) and a second user device (II), the method comprising the steps by said server system of:
- receiving (30;50) an electronic message or a portion thereof in the server system;
- providing (31;51) said electronic message or a portion thereof to said first user device (I);
- receiving at least one spam notification signal related to said electronic message or said portion thereof from said first user device (I), and
- **characterized by**
- preventing (33;55) downloading or preventing display from said server system (1) of said electronic message to said second user device (II) solely in response to receiving said at least one spam notification signal from the first user device (I).

2. The method according to claim 1, further comprising the step of receiving said electronic message by said server system (1) from a third user device (III) and wherein users of said first, second and third user devices are centrally registered.

3. The method according to claim 2, wherein each of said users is provided with a unique login code comprising a user address and a user-specific password for accessing the server system (1).

4. The method according to one or more of the preceding claims, further comprising the step by said server system (1) of receiving and transmitting said electronic message and possibly said spam notification signal in a secured manner.

5. The method according to one or more of the preceding claims in a server system (1) comprising at least a first server (1C) and a second server (1B), further comprising the steps of:
- receiving (50) said electronic message at said first server (1C);
- storing said electronic message at said first server (1C);
- transmitting (51) a portion of said electronic message to said second server (1A, 1B);
- receiving said portion of said electronic message at said second server;
- providing (52) said portion of said electronic message from said second server (1A, 1B) to said first user device (I, II);
- providing (53) said electronic message from said first server (1C) to said first user device (I, II) in response to selecting said portion of said electronic message.

6. The method according to claim 1, further comprising the step of receiving said spam notification signal at said first server (1C).

7. The method according to claim 5 or 6, further comprising the step of providing multiple copies of said electronic message, wherein the number of copies of said electronic message is less than the number of addressees of said electronic message.

8. The method according to claim 5 or 6, further comprising the step of storing said electronic message only once at said first server (1C).

9. The method according to claim 6, further comprising the step of deleting the electronic message at the first server (1C) and/or instructing the second server to delete the portion of the electronic message at the second server (1A, 1B) in response to said spam notification signal.

10. The method according to one or more of the preceding claims, further comprising the steps by said server system (1) of:
- receiving said spam notification signal from said first user device (I) for said electronic message;
- storing a sender identification of a sender of said electronic message for which said spam notification signal was received;
- receiving or having received one or more other electronic messages from said sender;
- restricting access to at least one of said other electronic messages for at least one of said first user device (I) and said second user device (II) using said sender identification.

11. The method according to claim 10, wherein said step of restricting access to said other electronic messages includes at least one of the following steps:
- restricting access to said other electronic messages for a particular time period;
- restricting access to a part of said other electronic messages; and
- restricting access to said other electronic messages for addressees of said other electronic messages in dependence of a communication history between said sender and said one or more addressees.

12. The method according to claim 11, wherein said time period or said part is determined by at least one of the following:
- the number of spam notification signals received for electronic messages of said sender;
- the number of times access has been restricted for electronic messages of said sender.

13. The method according to one or more of the preceding claims, further comprising the step of transmitting a warning message to a sender of said electronic message for which said spam notification signal was received.

14. The method according to one or more of the preceding claims, further comprising the step of restricting access to said server system (1) for a sender of said electronic message for which said spam notification signal was received.

15. The method according to claim 14, wherein said step of restricting access is dependent on at least one of the following:
- the number of spam notification signals received for electronic messages of a particular sender;
- the number of times access has been restricted for electronic messages of said sender; and
- a communication history between said sender and the one or more addressees of said electronic message.

16. The method according to one or more of the preceding claims, wherein said method steps are performed independently from the operation of a spam filter, said spam filter using a spam rule set to detect electronic spam messages received by said system.

17. A computer program comprising software code portions adapted for, when installed in and executed by an electronic system, performing the method according to claims 1-16.

18. A carrier containing the computer program of claim 17.

19. A server system (1) comprising one or more servers arranged for transmitting electronic messages to at least a first user device (I) and a second user device (II), the server system being adapted for reducing the proliferation of said electronic messages, wherein said server system comprises:
- an electronic message receiver (13) arranged for receiving an electronic message or a portion thereof;
- an electronic message provider (14) arranged for providing said electronic message or said portion thereof to said first user device (I);
- a spam notification receiver (15) arranged for receiving at least one spam notification signal related to said electronic message or said portion thereof from said first user device (I); and
- **characterized by**
- an access restrictor (16) arranged for preventing downloading or preventing display from said server system (1) for said electronic message for said second user device (II) solely in response to receiving said at least one spam notification signal from said first user device (I).

20. The server system (1) according to claim 19, wherein the server system comprises a register (17) storing a unique login code comprising a user address and a user specific password required for accessing the server system.

21. The server system (1) according to claim 19 or 20, wherein said server system is further arranged for receiving said electronic message from a third user device (III) and wherein said server system comprises means (18) for securing communication with said first, second and third user device.

22. The server system (1) according to one or more of the claims 19-21, wherein said server system comprises at least a first server (1C) and a second server (1A, 1B), wherein
said first server (1C) comprises:
- an electronic message receiver for receiving said electronic message;
- storage means for storing said electronic message;
- a portion provider adapted for providing a portion of said electronic message on the basis of said received electronic message;
- a transmitter for transmitting said portion of said electronic message to said second server, and
- a transmitter for transmitting said electronic message to said first user device in response to receiving a request for said electronic message from said first user device;
and said second server (1A, 1B) comprises:
- an electronic message portion receiver arranged for receiving said portion of said electronic message from said transmitter of said first server;
- means for providing said first user device with said portion of said electronic message.

23. The server system (1) according to claim 22, wherein said first server (1C) further comprises a spam notification signal receiver arranged for receiving said spam notification signal from said first user device.

24. The server system (1) according to one or more of the claims 19-23, wherein said server system is arranged for providing multiple copies of said electronic message, wherein the number of copies of said electronic message is less than the number of addressees of said electronic message.

25. The server system (1) according to one or more of the claims 22-24, wherein the system is arranged such that only the storage means of the first server stores said electronic message.

26. The server system (1) according to one or more of the claims 22-25, wherein the server system comprises an electronic message deleter and an electronic message portion deleter arranged for deleting the electronic message at the first server and for instructing the deletion of the electronic message portion at the second server in response to said spam notification signal.

27. The server system (1) according to one or more of the claims 19-26, wherein said system further comprises a sender identification storage arranged for storing a sender identification of a sender of said electronic message for which said spam notification signal receiver received a spam notification signal, wherein said electronic message receiver (13) is arranged to receive or have received other electronic messages and wherein said access restrictor is adapted for restricting access to at least one of said other electronic messages for at least one or said first user device (I) and said second user device (II) using said sender identification.

28. The server system (1) according to claim 27, wherein said access restrictor (16) is further adapted to perform at least one of the steps:
- restricting access to said other electronic messages for a particular time period;
- restricting access to a part of said other electronic messages.
- restricting access to said other electronic messages for addressees of said other electronic messages in dependence of a communication history between said sender and said one or more addressees.

29. The server system (1) according to claim 28, wherein said server system further comprises at least one of:
- a counter (21) adapted for counting the number of spam notification signals received for electronic messages of said sender, and
- a counter (21) adapted for counting the number of times access has been restricted for electronic messages of said sender.

30. The server system (1) according to one or more of the claims 19-29, wherein said server system further comprises a warning message transmitter (22) adapted for sending a warning message to a sender of said electronic message for which said spam notification signal was received.

31. The server system (1) according to one or more of the claims 19-30, further comprising an access restrictor (23) adapted to restrict access to said server system for a sender of said electronic message for which said spam notification signal was received.

32. The server system (1) according to claim 31, further comprising an assessor module (24) arranged to restrict access to the server system in dependence on at least one of the following:
- the number of spam notification signals received for electronic messages of a particular sender;
- the number of times access has been restricted for electronic messages of said sender; and
- a communication history between said sender and the one or more addressees of said electronic message.

33. The server system (1) according to one or more of the claims 19-32, wherein said server system is adapted to operate independently from a spam filter, said spam filter using a spam rule set for detecting electronic spam messages.

34. The server system (1) according to one or more of the claims 19-33, wherein one or more of said servers comprise a programmable database.

## Patentansprüche

1. Verfahren zur Eindämmung der Verbreitung elektronischer Nachrichten in einem Serversystem (1) mit einem oder mehreren Servern, die dafür eingerichtet sind, die elektronischen Nachrichten zu mindestens einer ersten Benutzervorrichtung (I) und einer zweiten Benutzervorrichtung (II) zu senden, wobei das Verfahren die folgenden durch das Serversystem ausgeführten Schritte aufweist:
- Empfangen (30; 50) einer elektronischen Nachricht oder eines Teils davon in dem Serversystem,
- Bereitstellen (31; 51) der elektronischen Nachricht oder eines Teils davon für die erste Benutzervorrichtung (I),
- Empfangen mindestens eines Spam-Benachrichtigungssignals in Bezug auf die elektronische Nachricht oder den Teil davon von der ersten Benutzervorrichtung (I),
- **gekennzeichnet durch**
- Verhindern (33; 55), **durch** das Serversystem (1), des Herunterladens der elektronischen Nachricht zu der zweiten Benutzervorrichtung (II) oder des Anzeigens der elektronischen Nachricht für die zweite Benutzervorrichtung (II), ausschließlich ansprechend auf den Empfang des mindestens einen Spam-Benachrichtigungssignals von der ersten Benutzervorrichtung (I).

2. Verfahren nach Anspruch 1, welches ferner folgenden Schritt aufweist: Empfangen der elektronischen Nachricht durch das Serversystem (1) von einer dritten Benutzervorrichtung (III), wobei Benutzer der ersten, der zweiten und der dritten Benutzervorrichtung zentral registriert werden.

3. Verfahren nach Anspruch 2, wobei jedem der Benutzer ein eindeutiger Anmeldecode bereitgestellt wird, der eine Benutzeradresse und ein benutzerspezifisches Passwort zum Zugreifen auf das Serversystem (1) aufweist.

4. Verfahren nach einem oder mehreren der vorhergehenden Ansprüche, welches ferner den folgenden durch das Serversystem (1) ausgeführten Schritt aufweist: Empfangen und Senden der elektronischen Nachricht und möglicherweise des Spam-Benachrichtigungssignals in einer abgesicherten Weise.

5. Verfahren nach einem oder mehreren der vorhergehenden Ansprüche in einem Serversystem (1) mit mindestens einem ersten Server (1C) und einem zweiten Server (1B), welches ferner folgende Schritte aufweist:
- Empfangen (50) der elektronischen Nachricht an dem ersten Server (1C),
- Speichern der elektronischen Nachricht an dem ersten Server (1C),
- Senden (51) eines Teils der elektronischen Nachricht zu dem zweiten Server (1A, 1B),
- Empfangen des Teils der elektronischen Nachricht an dem zweiten Server,
- Bereitstellen (52) des Teils der elektronischen Nachricht von dem zweiten Server (1A, 1B) für die erste Benutzervorrichtung (I, II) und
- Bereitstellen (53) der elektronischen Nachricht von dem ersten Server (1C) für die erste Benutzervorrichtung (I, II) ansprechend auf die Auswahl des Teils der elektronischen Nachricht.

6. Verfahren nach Anspruch 1, welches ferner den Schritt des Empfangens des Spam-Benachrichtigungssignals an dem ersten Server (1C) aufweist.

7. Verfahren nach Anspruch 5 oder 6, welches ferner folgenden Schritt aufweist: Bereitstellen mehrerer Kopien der elektronischen Nachricht, wobei die Anzahl der Kopien der elektronischen Nachricht kleiner als die Anzahl der Adressaten der elektronischen Nachricht ist.

8. Verfahren nach Anspruch 5 oder 6, welches ferner den Schritt des nur einmaligen Speicherns der elektronischen Nachricht an dem ersten Server (1C) aufweist.

9. Verfahren nach Anspruch 6, welches ferner folgenden Schritt aufweist: Löschen der elektronischen Nachricht an dem ersten Server (1C) und/oder Anweisen des zweiten Servers, den Teil der elektronischen Nachricht an dem zweiten Server (1A, 1B) zu löschen, ansprechend auf das Spam-Benachrichtigungssignal.

10. Verfahren nach einem oder mehreren der vorhergehenden Ansprüche, welches ferner die folgenden durch das Serversystem (1) ausgeführten Schritte aufweist:
- Empfangen des Spam-Benachrichtigungssignals für die elektronische Nachricht von der ersten Benutzervorrichtung (I),
- Speichern einer Absenderidentifikation eines Absenders der elektronischen Nachricht, wofür das Spam-Benachrichtigungssignal empfangen worden ist,
- Empfangen oder Empfangenlassen von einer oder mehreren anderen elektronischen Nachrichten von dem Absender und
- Beschränken des Zugriffs auf mindestens eine der anderen elektronischen Nachrichten für mindestens eine von der ersten Benutzervorrichtung (I) und der zweiten Benutzervorrichtung (II) unter Verwendung der Absenderidentifikation.

11. Verfahren nach Anspruch 10, wobei der Schritt des Beschränkens des Zugriffs auf die anderen elektronischen Nachrichten mindestens einen der folgenden Schritte aufweist:
- Beschränken des Zugriffs auf die anderen elektronischen Nachrichten für einen bestimmten Zeitraum,
- Beschränken des Zugriffs auf einen Teil der anderen elektronischen Nachrichten und
- Beschränken des Zugriffs auf die anderen elektronischen Nachrichten für Adressaten der anderen elektronischen Nachrichten, abhängig von einer Kommunikationsgeschichte zwischen dem Absender und dem einen oder den mehreren Adressaten.

12. Verfahren nach Anspruch 11, wobei der Zeitraum oder der Teil durch mindestens eine der folgenden festgelegt wird:
- die Anzahl der für elektronische Nachrichten des Absenders empfangenen Spam-Benachrichtigungssignale und
- die Häufigkeit, mit der der Zugriff für elektronische Nachrichten des Absenders beschränkt worden ist.

13. Verfahren nach einem oder mehreren der vorhergehenden Ansprüche, welches ferner folgenden Schritt aufweist: Senden einer Warnnachricht zu einem Absender der elektronischen Nachricht, wofür das Spam-Benachrichtigungssignal empfangen worden ist.

14. Verfahren nach einem oder mehreren der vorhergehenden Ansprüche, welches ferner folgenden Schritt aufweist: Beschränken des Zugriffs auf das Serversystem (1) für einen Absender der elektronischen Nachricht, wofür das Spam-Benachrichtigungssignal empfangen worden ist.

15. Verfahren nach Anspruch 14, wobei der Schritt des Beschränkens des Zugriffs von mindestens einem der folgenden abhängt:
- der Anzahl der für elektronische Nachrichten eines bestimmten Absenders empfangenen Spam-Benachrichtigungssignale,
- der Häufigkeit, mit der der Zugriff für elektronische Nachrichten des Absenders beschränkt worden ist, und
- einer Kommunikationsgeschichte zwischen dem Absender und dem einen oder den mehreren Adressaten der elektronischen Nachricht.

16. Verfahren nach einem oder mehreren der vorhergehenden Ansprüche, wobei die Verfahrensschritte unabhängig von der Operation eines Spam-Filters ausgeführt werden, wobei der Spam-Filter einen Spam-Regelsatz verwendet, um durch das System empfangene elektronische Spam-Nachrichten zu erkennen.

17. Computerprogramm mit Softwarecodeteilen, die, wenn sie in einem elektronischen System eingerichtet sind und dadurch ausgeführt werden, dafür geeignet sind, das Verfahren nach den Ansprüchen 1 bis 16 auszuführen.

18. Träger, der das Computerprogramm nach Anspruch 17 enthält.

19. Serversystem (1) mit einem oder mehreren Servern, die dafür eingerichtet sind, elektronische Nachrichten zu mindestens einer ersten Benutzervorrichtung (I) und einer zweiten Benutzervorrichtung (II) zu senden, wobei das Serversystem dafür eingerichtet ist, die Verbreitung der elektronischen Nachrichten einzudämmen, wobei das Serversystem aufweist:
- einen Empfänger (13) elektronischer Nachrichten, der dafür eingerichtet ist, eine elektronische Nachricht oder einen Teil davon zu empfangen,
- einen Provider (14) für elektronische Nachrichten, der dafür eingerichtet ist, die elektronische Nachricht oder den Teil davon der ersten Benutzervorrichtung (I) bereitzustellen,
- einen Spam-Benachrichtigungsempfänger (15), der dafür eingerichtet ist, mindestens ein Spam-Benachrichtigungssignal von der ersten Benutzervorrichtung (I) zu empfangen, das sich auf die elektronische Nachricht oder den Teil davon bezieht,
- **gekennzeichnet durch**
- einen Zugriffsbeschränker (16), der dafür eingerichtet ist, folgendes auszuführen: Verhindern, **durch** das Serversystem (1), des Herunterladens der elektronischen Nachricht zu der zweiten Benutzervorrichtung (II) oder des Anzeigens der elektronischen Nachricht für die zweite Benutzervorrichtung (II), ausschließlich ansprechend auf den Empfang des mindestens einen Spam-Benachrichtigungssignals von der ersten Benutzervorrichtung (I).

20. Serversystem (1) nach Anspruch 19, wobei das Serversystem ein Register (17) aufweist, das einen eindeutigen Anmeldecode speichert, der eine Benutzeradresse und ein benutzerspezifisches Passwort aufweist, die für den Zugriff auf das Serversystem erforderlich sind.

21. Serversystem (1) nach Anspruch 19 oder 20, wobei das Serversystem ferner dafür eingerichtet ist, folgendes auszuführen: Empfangen der elektronischen Nachricht von einer dritten Benutzervorrichtung (III), wobei das Serversystem eine Einrichtung (18) aufweist, um die Kommunikation mit der ersten, der zweiten und der dritten Benutzervorrichtung zu sichern.

22. Serversystem (1) nach einem oder mehreren der Ansprüche 19 bis 21, wobei das Serversystem mindestens einen ersten Server (1C) und einen zweiten Server (1A, 1B) aufweist, wobei
der erste Server (1C) aufweist:
- einen Empfänger elektronischer Nachrichten zum Empfangen der elektronischen Nachricht,
- eine Speichereinrichtung zum Speichern der elektronischen Nachricht,
- einen Teil-Provider, der dafür eingerichtet ist, einen Teil der elektronischen Nachricht auf der Grundlage der empfangenen elektronischen Nachricht bereitzustellen,
- einen Sender zum Senden des Teils der elektronischen Nachricht zu dem zweiten Server und
- einen Sender zum Senden der elektronischen Nachricht zu der ersten Benutzervorrichtung ansprechend auf den Empfang einer Anforderung der elektronischen Nachricht von der ersten Benutzervorrichtung,
und wobei der zweite Server (1A, 1B) aufweist:
- einen Empfänger für Teile elektronischer Nachrichten, der dafür eingerichtet ist, den Teil der elektronischen Nachricht von dem Sender des ersten Servers zu empfangen, und
- eine Einrichtung zum Bereitstellen des Teils der elektronischen Nachricht für die erste Benutzervorrichtung.

23. Serversystem (1) nach Anspruch 22, wobei der erste Server (1C) ferner einen Spam-Benachrichtigungssignalempfänger aufweist, der dafür eingerichtet ist, das Spam-Benachrichtigungssignal von der ersten Benutzervorrichtung zu empfangen.

24. Serversystem (1) nach einem oder mehreren der Ansprüche 19 bis 23, wobei das Serversystem dafür eingerichtet ist, mehrere Kopien der elektronischen Nachricht bereitzustellen, wobei die Anzahl der Kopien der elektronischen Nachricht kleiner als die Anzahl der Adressaten der elektronischen Nachricht ist.

25. Serversystem (1) nach einem oder mehreren der Ansprüche 22 bis 24, wobei das System so eingerichtet ist, dass nur die Speichereinrichtung des ersten Servers die elektronische Nachricht speichert.

26. Serversystem (1) nach einem oder mehreren der Ansprüche 22 bis 25, wobei das Serversystem eine Einrichtung zum Löschen elektronischer Nachrichten und eine Einrichtung zum Löschen von Teilen elektronischer Nachrichten aufweist, die dafür eingerichtet sind, die elektronische Nachricht an dem ersten Server zu löschen und das Löschen des Teils der elektronischen Nachricht an dem zweiten Server ansprechend auf das Spam-Benachrichtigungssignal vorzuschreiben.

27. Serversystem (1) nach einem oder mehreren der Ansprüche 19 bis 26, wobei das System ferner einen Absenderidentifikationsspeicher aufweist, der dafür eingerichtet ist, eine Absenderidentifikation eines Absenders der elektronischen Nachricht, wofür der Spam-Benachrichtigungssignalempfänger ein Spam-Benachrichtigungssignal empfangen hat, zu speichern, wobei der Empfänger (13) elektronischer Nachrichten dafür eingerichtet ist, andere elektronische Nachrichten zu empfangen oder empfangen zu lassen und wobei der Zugriffsbeschränker dafür eingerichtet ist, den Zugriff auf mindestens eine der anderen elektronischen Nachrichten für mindestens eine von der ersten Benutzervorrichtung (I) und der zweiten Benutzervorrichtung (II) unter Verwendung der Absenderidentifikation zu beschränken.

28. Serversystem (1) nach Anspruch 27, wobei der Zugriffsbeschränker (16) ferner dafür eingerichtet ist, mindestens einen der folgenden Schritte auszuführen:
- Beschränken des Zugriffs auf die anderen elektronischen Nachrichten für einen bestimmten Zeitraum,
- Beschränken des Zugriffs auf einen Teil der anderen elektronischen Nachrichten und
- Beschränken des Zugriffs auf die anderen elektronischen Nachrichten für Adressaten der anderen elektronischen Nachrichten, abhängig von einer Kommunikationsgeschichte zwischen dem Absender und dem einen oder den mehreren Adressaten.

29. Serversystem (1) nach Anspruch 28, wobei das Serversystem ferner mindestens einen der folgenden aufweist:
- einen Zähler (21), der dafür eingerichtet ist, die Anzahl der für elektronische Nachrichten des Absenders empfangenen Spam-Benachrichtigungssignale zu zählen, und
- einen Zähler (21), der dafür eingerichtet ist, die Häufigkeit zu zählen, mit der der Zugriff für elektronische Nachrichten des Absenders beschränkt worden ist.

30. Serversystem (1) nach einem oder mehreren der Ansprüche 19 bis 29, wobei das Serversystem ferner einen Warnnachrichtensender (22) aufweist, der dafür eingerichtet ist, eine Warnnachricht zu einem Absender der elektronischen Nachricht zu senden, wofür das Spam-Benachrichtigungssignal empfangen worden ist.

31. Serversystem (1) nach einem oder mehreren der Ansprüche 19 bis 30, welches ferner einen Zugriffsbeschränker (23) aufweist, der dafür eingerichtet ist, den Zugriff auf das Serversystem für einen Absender der elektronischen Nachricht zu beschränken, wofür das Spam-Benachrichtigungssignal empfangen worden ist.

32. Serversystem (1) nach Anspruch 31, welches ferner ein Bewertungsmodul (24) aufweist, das dafür eingerichtet ist, den Zugriff auf das Serversystem abhängig von mindestens einer der folgenden zu beschränken:
- der Anzahl der für elektronische Nachrichten eines bestimmten Absenders empfangenen Spam-Benachrichtigungssignale,
- der Häufigkeit, mit der der Zugriff für elektronische Nachrichten des Absenders beschränkt worden ist, und
- einer Kommunikationsgeschichte zwischen dem Absender und dem einen oder den mehreren Adressaten der elektronischen Nachricht.

33. Serversystem (1) nach einem oder mehreren der Ansprüche 19 bis 32, wobei das Serversystem dafür eingerichtet ist, unabhängig von einem Spam-Filter zu arbeiten, wobei der Spam-Filter einen Spam-Regelsatz verwendet, um elektronische Spam-Nachrichten zu erkennen.

34. Serversystem (1) nach einem oder mehreren der Ansprüche 19 bis 33, wobei der eine oder die mehreren der Server eine programmierbare Datenbank aufweisen.

## Revendications

1. Procédé de réduction de la prolifération de messages électroniques dans un système de serveurs (1) comprenant un ou plusieurs serveurs agencés pour transmettre lesdits messages électroniques à au moins un premier dispositif d'utilisateur (I) et à un deuxième dispositif d'utilisateur (II), le procédé comprenant les étapes, effectuées par ledit système de serveurs :
- de réception (30 ; 50) d'un message électronique ou d'une partie de celui-ci dans le système de serveurs ;
- de fourniture (31 ; 51) dudit message électronique ou d'une partie de celui-ci au dit premier dispositif d'utilisateur (I) ;
- de réception d'au moins un signal de notification de spam associé au dit message électronique ou à ladite partie de celui-ci dudit premier dispositif d'utilisateur (I), et
- **caractérisé en ce que**
- le téléchargement ou l'affichage dudit message électronique dudit système de serveurs (1) vers ledit deuxième dispositif d'utilisateur (II) n'est empêché (33 ; 55) qu'en réponse à la réception dudit au moins un signal de notification de spam du premier dispositif d'utilisateur (I).

2. Procédé selon la revendication 1, comprenant en outre l'étape de réception dudit message électronique par ledit système de serveurs (1) d'un troisième dispositif d'utilisateur (III), et dans lequel les utilisateurs desdits premier, deuxième et troisième dispositifs d'utilisateur sont enregistrés de manière centralisée.

3. Procédé selon la revendication 2, dans lequel chacun desdits utilisateurs reçoit un code d'enregistrement unique comprenant une adresse d'utilisateur et un mot de passe spécifique à un utilisateur pour accéder au système de serveurs (1).

4. Procédé selon une ou plusieurs des revendications précédentes, comprenant en outre l'étape effectuée par ledit système de serveurs (1) de réception et de transmission dudit message électronique et éventuellement dudit signal de notification de spam d'une manière sécurisée.

5. Procédé selon une ou plusieurs des revendications précédentes dans un système de serveurs (1) comprenant au moins un premier serveur (1C) et un deuxième serveur (1B), comprenant en outre les étapes :
- de réception (50) dudit message électronique au niveau dudit premier serveur (1C) ;
- de mémorisation dudit message électronique au niveau dudit premier serveur (1C) ;
- de transmission (51) d'une partie dudit message électronique au dit deuxième serveur (1A, 1B) ;
- de réception de ladite partie dudit message électronique au niveau dudit deuxième serveur ;
- de fourniture (52) de ladite partie dudit message électronique dudit deuxième serveur (1A, 1B) au dit premier dispositif d'utilisateur (I, II) ;
- de fourniture (53) dudit message électronique dudit premier serveur (1C) au dit premier dispositif d'utilisateur (I, II) en réponse à la sélection de ladite partie dudit message électronique.

6. Procédé selon la revendication 1, comprenant en outre l'étape de réception dudit signal de notification de spam au niveau dudit premier serveur (1C).

7. Procédé selon la revendication 5 ou 6, comprenant en outre l'étape de fourniture de multiples copies dudit message électronique, dans lequel le nombre de copies dudit message électronique est inférieur au nombre de destinataires dudit message électronique.

8. Procédé selon la revendication 5 ou 6, comprenant en outre l'étape de mémorisation dudit message électronique une seule fois au niveau dudit premier serveur (1C).

9. Procédé selon la revendication 6, comprenant en outre l'étape d'effacement du message électronique au niveau du premier serveur (1C) et/ou de fourniture d'une instruction au deuxième serveur de supprimer la partie du message électronique au niveau du deuxième serveur (1A, 1B) en réponse au dit signal de notification de spam.

10. Procédé selon une ou plusieurs des revendications précédentes, comprenant en outre les étapes effectuées par ledit système de serveurs (1) :
- de réception dudit signal de notification de spam dudit premier dispositif d'utilisateur (I) pour ledit message électronique ;
- de mémorisation d'une identification d'émetteur d'un émetteur dudit message électronique pour lequel ledit signal de notification de spam a été reçu ;
- de réception ou de réception achevée d'un ou de plusieurs autres messages électroniques dudit émetteur ;
- de limitation de l'accès à au moins l'un desdits autres messages électroniques pour au moins l'un dudit premier dispositif d'utilisateur (I) et dudit deuxième dispositif d'utilisateur (II) en utilisant ladite identification d'émetteur.

11. Procédé selon la revendication 10, dans lequel ladite étape de limitation de l'accès auxdits autres messages électroniques comprend au moins l'une des étapes suivantes :
- de limitation de l'accès auxdits autres messages électroniques pendant une période de temps particulière ;
- de limitation de l'accès à une partie desdits autres messages électroniques ; et
- de limitation de l'accès auxdits autres messages électroniques pour les destinataires desdits autres messages électroniques en fonction d'un historique de communication entre ledit émetteur et lesdits un ou plusieurs destinataires.

12. Procédé selon la revendication 11, dans lequel ladite période de temps ou ladite partie est déterminée par au moins l'un des nombres suivants :
- le nombre de signaux de notification de spam reçus pour des messages électroniques dudit émetteur ;
- le nombre de fois que l'accès a été limité pour des messages électroniques dudit émetteur.

13. Procédé selon une ou plusieurs des revendications précédentes, comprenant en outre l'étape de transmission d'un message d'avertissement à un émetteur dudit message électronique pour lequel ledit signal de notification de spam a été reçu.

14. Procédé selon une ou plusieurs des revendications précédentes, comprenant en outre l'étape de limitation de l'accès au dit système de serveurs (1) pour un émetteur dudit message électronique pour lequel ledit signal de notification de spam a été reçu.

15. Procédé selon la revendication 14, dans lequel ladite étape de limitation de l'accès dépend d'au moins l'un des éléments suivants :
- le nombre de signaux de notification de spam reçus pour des messages électroniques d'un émetteur particulier ;
- le nombre de fois que l'accès a été limité pour des messages électroniques dudit émetteur ; et
- un historique de communication entre ledit émetteur et lesdits un ou plusieurs destinataires dudit message électronique.

16. Procédé selon une ou plusieurs des revendications précédentes, dans lequel lesdites étapes de procédé sont effectuées de manière indépendante du fonctionnement d'un filtre de spam, ledit filtre de spam utilisant un ensemble de règles de spam pour détecter des messages électroniques de spam reçus par ledit système.

17. Programme d'ordinateur comprenant des parties de code logiciel conçues pour, lorsqu'elles sont installées dans et exécutées par un système électronique, mettre en oeuvre le procédé selon les revendications 1 à 16.

18. Support contenant le programme d'ordinateur selon la revendication 17.

19. Système de serveurs (1) comprenant un ou plusieurs serveurs agencés pour transmettre des messages électroniques à au moins un premier dispositif d'utilisateur (I) et un deuxième dispositif d'utilisateur (II), le système de serveurs étant conçu pour réduire la prolifération desdits messages électroniques, dans lequel ledit système de serveurs comprend :
- un récepteur de message électronique (13) agencé pour recevoir un message électronique ou une partie de celui-ci ;
- un fournisseur de message électronique (14) agencé pour fournir ledit message électronique ou ladite partie de celui-ci au dit premier dispositif d'utilisateur (I) ;
- un récepteur de notification de spam (15) agencé pour recevoir au moins un signal de notification de spam associé au dit message électronique ou à ladite partie de celui-ci dudit premier dispositif d'utilisateur (I) ; et
- **caractérisé par**
- un limiteur d'accès (16) agencé pour empêcher le téléchargement ou pour empêcher l'affichage dudit message électronique dudit système de serveurs (1) pour ledit deuxième dispositif d'utilisateur (II) uniquement en réponse à la réception dudit au moins un signal de notification de spam dudit premier dispositif d'utilisateur (I).

20. Système de serveurs (1) selon la revendication 19, dans lequel le système de serveurs comprend un registre (17) mémorisant un code d'enregistrement unique comprenant une adresse d'utilisateur et un mot de passe spécifique à l'utilisateur nécessaire pour accéder au système de serveurs.

21. Système de serveurs (1) selon la revendication 19 ou 20, dans lequel ledit système de serveurs est en outre agencé pour recevoir ledit message électronique d'un troisième dispositif d'utilisateur (III), et dans lequel ledit système de serveurs comprend des moyens (18) pour sécuriser une communication avec lesdits premier, deuxième et troisième dispositifs d'utilisateur.

22. Système de serveurs (1) selon une ou plusieurs des revendications 19 à 21, dans lequel ledit système de serveurs comprend au moins un premier serveur (1C) et un deuxième serveur (1A, 1B), dans lequel
ledit premier serveur (1C) comprend :
- un récepteur de message électronique pour recevoir ledit message électronique ;
- des moyens de mémorisation pour mémoriser ledit message électronique ;
- un fournisseur de partie conçu pour fournir une partie dudit message électronique sur la base dudit message électronique reçu ;
- un émetteur pour transmettre ladite partie dudit message électronique au dit deuxième serveur et
- un émetteur pour transmettre ledit message électronique au dit premier dispositif d'utilisateur en réponse à la réception d'une demande pour ledit message électronique dudit premier dispositif d'utilisateur ;
et ledit deuxième serveur (1A, 1B) comprend :
- un récepteur de partie de message électronique agencé pour recevoir ladite partie dudit message électronique dudit émetteur dudit premier serveur ;
- des moyens pour fournir au dit premier dispositif d'utilisateur ladite partie dudit message électronique.

23. Système de serveurs (1) selon la revendication 22, dans lequel ledit premier serveur (1C) comprend en outre un récepteur de signal de notification de spam agencé pour recevoir ledit signal de notification de spam dudit premier dispositif d'utilisateur.

24. Système de serveurs (1) selon une ou plusieurs des revendications 19 à 23, dans lequel ledit système de serveurs est agencé pour fournir de multiples copies dudit message électronique, dans lequel le nombre de copies dudit message électronique est inférieur au nombre de destinataires dudit message électronique.

25. Système de serveurs (1) selon une ou plusieurs des revendications 22 à 24, dans lequel le système est agencé de sorte que seuls les moyens de mémorisation du premier serveur mémorisent ledit message électronique.

26. Système de serveurs (1) selon une ou plusieurs des revendications 22 à 25, dans lequel le système de serveurs comprend un effaceur de message électronique et un effaceur de partie de message électronique agencés pour effacer le message électronique dans le premier serveur et pour ordonner l'effacement de la partie de message électronique dans le deuxième serveur en réponse au dit signal de notification de spam.

27. Système de serveurs (1) selon une ou plusieurs des revendications 19 à 26, dans lequel ledit système comprend en outre une mémoire d'identification d'émetteur agencée pour mémoriser une identification d'émetteur d'un émetteur dudit message électronique pour lequel ledit récepteur de signal de notification de spam a reçu un signal de notification de spam, dans lequel ledit récepteur de message électronique (13) est agencé pour recevoir ou avoir reçu d'autres messages électroniques, et dans lequel ledit limiteur d'accès est conçu pour limiter l'accès à au moins l'un desdits autres messages électroniques pour au moins l'un dudit premier dispositif d'utilisateur (I) et dudit deuxième dispositif d'utilisateur (II) en utilisant ladite identification d'émetteur.

28. Système de serveurs (1) selon la revendication 27, dans lequel ledit limiteur d'accès (16) est en outre conçu pour effectuer au moins l'une des étapes :
- de limitation de l'accès auxdits autres messages électroniques pendant une période de temps particulière ;
- de limitation de l'accès à une partie desdits autres messages électroniques ;
- de limitation de l'accès auxdits autres messages électroniques pour des destinataires desdits autres messages électroniques en fonction d'un historique de communication entre ledit émetteur et lesdits un ou plusieurs destinataires.

29. Système de serveurs (1) selon la revendication 28, dans lequel ledit système de serveurs comprend en outre au moins l'un :
- d'un compteur (21) conçu pour compter le nombre de signaux de notification de spam reçus pour des messages électroniques dudit émetteur, et
- d'un compteur (21) conçu pour compter le nombre de fois que l'accès a été limité pour des messages électroniques dudit émetteur.

30. Système de serveurs (1) selon une ou plusieurs des revendications 19 à 29, dans lequel ledit système de serveurs comprend en outre un émetteur de message d'avertissement (22) conçu pour envoyer un message d'avertissement à un émetteur dudit message électronique pour lequel ledit signal de notification de spam a été reçu.

31. Système de serveurs (1) selon une ou plusieurs des revendications 19 à 30, comprenant en outre un limiteur d'accès (23) conçu pour limiter l'accès au dit système de serveurs pour un émetteur dudit message électronique pour lequel ledit signal de notification de spam a été reçu.

32. Système de serveurs (1) selon la revendication 31, comprenant en outre un module d'évaluation (24) agencé pour limiter l'accès au système de serveurs en fonction d'au moins l'un des éléments suivants :
- le nombre de signaux de notification de spam reçus pour des messages électroniques d'un émetteur particulier ;
- le nombre de fois que l'accès a été limité pour des messages électroniques dudit émetteur ; et
- un historique de communication entre ledit émetteur et lesdits un ou plusieurs destinataires dudit message électronique.

33. Système de serveurs (1) selon une ou plusieurs des revendications 19 à 32, dans lequel ledit système de serveurs est conçu pour fonctionner de manière indépendante d'un filtre de spam, ledit filtre de spam utilisant un ensemble de règles de spam pour détecter des messages électroniques de spam.

34. Système de serveurs (1) selon une ou plusieurs des revendications 19 à 33, dans lequel un ou plusieurs desdits serveurs comprennent une base de données programmable.
